# EUROPEAN PATENT SPECIFICATION

(11) **EP 2 492 568 B1**
(45) Date of publication and mention of the grant of the patent: **22.04.2015**
(21) Application number: 12001110.1
(22) Date of filing: 20.02.2012
(51) Int. Cl.: F16L 19/10, F16K 1/04, F16K 27/02, F16L 19/06, F16L 55/11

(54) **Closing valve**
Schliessventil
Vanne de fermeture

(30) Priority: 23.02.2011 JP 2011037478
(43) Date of publication of application: 29.08.2012
(73) Proprietor: Nasco Fitting CO., LTD., Aichi 455-0053 (JP); Chiyoda Kuchokiki Co., Ltd., Osaka 599-8247 (JP)
(72) Inventor: Mizuguchi, Norio, Nagoya-shi Aichi 455-0053 (JP)
(74) Representative: Müller-Boré & Partner Patentanwälte PartG mbB

(56) References cited:
- DE-A1- 2 845 072
- FR-A1- 2 719 357
- JP-A- 2005 325 872
- JP-U- 60 188 969

## Description

The present invention relates to a closing valve.

Japanese Patent Application Publication No. JP-A-2005-325872 (hereinafter, "Patent Document 1") discloses a closing valve connecting between a heat exchanger and a pipe in a heat transfer apparatus in which refrigerant is circulated through a pipe forming a closed loop including the heat exchanger. The closing valve includes a housing formed with a flow path of the refrigerant, a valve function unit which opens and closes the flow path, and a joint function unit provided for connecting the pipe.

Figure 19 of Patent Document 1 illustrates the joint function unit showing a current state of the art to which the closing valve belongs. The joint function unit includes a cylindrical joint body which constitutes one of ends of the flow path and is formed with a tapered sealing surface. A flared connecting end of the pipe is adhered closely to the tapered sealing surface and both are tightened up by a nut. However, this connecting manner with the use of the tapered sealing surface easily causes refrigerant to leak out. Refrigerant leakage (a Freon gas and carbon dioxide) results in global environment disruption such as warm temperature trend and destruction of ozone layer. Accordingly, measures to prevent refrigerant from leakage in the heat transfer apparatus is an important issue to be coped with.

In view of the foregoing circumstances, the applicant of the present application proposed the closing valve provided with a joint function unit exponentially suppressing an amount of refrigerant leak, as described in Patent Document 1. The joint function unit includes a cylindrical joint body constituting one of ends of the flow path, a cylindrical clamping member threadingly engageable with the joint body, a metal clamp ring surrounding a pipe inserted into the clamping member and the joint body, and a diameter reducing unit. The diameter reducing unit has a tapered surface inclined in a pipe insertion direction and plastically deforms the clamp ring in a diameter-reducing direction while causing the clamp ring to airtightly adhere to an inner periphery of the joint body with threading advance of the clamping member, whereby the clamp ring is tightened so as to bite into an outer periphery of the pipe and so as to adhere airtightly to the outer periphery of the pipe while free movement of the clamp ring being limited. The structure of connecting the pipe by reducing the diameter of the clamp ring is thus highly effective from the standpoint of refrigerant leak prevention.

Regarding the heat transfer apparatus, business is conducted while the closing valve is mounted on the heat exchanger and the heat exchanger is filled with refrigerant. The flow path in the housing is blocked by a valve element of the valve function unit for prevention of refrigerant leak until the pipe is connected to the heat exchanger, and furthermore, a sealing unit is provided on the joint function unit to check the flow path from external air as secondary leak prevention measures.

In the closing valve as depicted in Figure 19 of Patent Document 1 as showing the current state of the art, the tapered sealing surface is covered by a cap-like metal sealing member, and the sealing member is adapted to be fixed to the joint body by tightening the nut. According to this sealing structure, however, since the metal sealing member is strongly pressed against the tapered sealing surface to maintain tightness relative to the pipe, it is concerned that the tapered sealing surface may be damaged such that the sealing performance would be reduced.

The invention was made in view of the foregoing circumstances and an object thereof is to provide a closing valve which includes a joint function unit connecting a pipe by reducing a diameter of the clamping ring and which can tightly sealing the joint function unit without reduction in the sealing performance.

The present invention provides a closing valve including a housing mounted on a heat exchanger; a refrigerant flow path formed in the housing; a valve element opening and closing the flow path; and a joint function unit which connects a pipe to the flow path, the joint function unit including a cylindrical joint body which constitutes one end of the flow path and into which the pipe is adapted to be inserted; a cylindrical clamping member which is threadingly engaged with an outer periphery of a rear end of the joint body in a pipe insertion direction in a coaxial manner and through which the pipe is adapted to extend; a clamp ring surrounding the pipe coaxially inserted into the joint body; and a diameter reducing unit which has an tapered surface inclined in the pipe insertion direction and which presses the clamp ring by the clamping member threadingly advanced in a tightening direction, whereby the clamp ring is plastically deformed in a diameter-reducing direction while gastightly adhering to an inner periphery of the joint body thereby to bite into and gastightly adhere to an outer periphery of the pipe with relative displacement of the clamp ring being limited, characterized by a sealing member detachably attachable to the joint function unit and capable of limiting flow of the refrigerant in the joint function unit while in non-contact with a seal area of the inner periphery of the clamp ring with respect to the pipe, and characterized in that the joint body has an inner periphery formed with a female thread and a sealing receiving portion; the sealing member is inserted into the joint function unit so as to extend through the clamping member; the sealing member has an outer periphery formed with a male thread and a sealing abutting portion; and the male thread is screwed into the female thread so that the sealing abutting portion abuts against the sealing receiving portion in a gastight manner, whereby flow of the refrigerant in the joint function unit is limited, such that refrigerant in the flow path does not leak into the atmosphere since the interior of the joint function unit is airtightly sealed by the sealing action of the sealing member.

According to the above-described construction, since the sealing member is in non-contact with the seal area of the inner periphery of the clamp ring with respect to the pipe, there is no possibility that the seal area may be damaged by the sealing member. Accordingly, the sealing performance of the clamp ring can be prevented from being reduced due to the mounting of the sealing member, and refrigerant leakage can reliably be prevented in the state where the pipe is connected to the closing valve.

In limiting the refrigerant flow in the joint function unit, the sealing member is inserted into the joint function unit and the male thread is screwed into the female thread. When the pipe is connected to the joint function unit, the sealing member is unscrewed thereby to be detached. In this case, since the clamping member need not be detached from the joint function unit, the closing valve is superior in the workability.

In one embodiment, the sealing member includes a seal body having a front end on which the male thread is formed and a stopper which is formed integrally with a rear end of the seal body and limits movement of the clamping member in a loosening direction when a rear end of the clamping member abuts against the stopper. According to the construction, even when the clamping member is rotated in the loosening direction in which the clamping member is detached from the joint body while the sealing member is mounted on the joint function unit, the clamping member abuts on the stopper, which limits the movement of the clamping member in the loosening direction.

In another embodiment, the male thread has a helical pitch differing from a helical pitch of a threading engagement portion of the joint body and the clamping member and the sealing member is locked without rotation together with the clamping member due to the difference between the helical pitches even when the clamping member is rotated in the loosening direction while being in abutment against the stopper thereby to be prevented from moving in the loosening direction.

According to this, even when a strong force rotates the clamping member in the loosening direction from the state where the abutment of the clamping member on the stopper limits the movement of the clamping member in the loosening direction, the threading engagement portion of the clamping member and the male thread of the sealing member have different pitches, the sealing member is locked without rotation with the clamping member. Consequently, the sealing member can reliably be prevented from being loosened when the clamping member functions as a locknut.
Fig. 1 is a sectional view showing a joint function unit mounted with a sealing member in embodiment 1;
Fig. 2 is a sectional view showing a pipe connected to the joint function unit;
Fig. 3 is a partially enlarged sectional view of the joint function unit and the sealing member as shown in Fig. 1;
Fig. 4 is a sectional view showing the joint function unit into which a pipe is inserted;
Fig. 5 is a partially enlarged sectional view of the joint function unit and the pipe as shown in Fig. 2;
Fig. 6 is a sectional view showing the clamping member on which the clamp ring is mounted;
Fig. 7 is a sectional view of the sealing member in embodiment 2;
Fig. 8 is a sectional view showing the sealing member mounted on the joint function unit in embodiment 3; and
Fig. 9 is a sectional view showing the sealing member mounted on the joint function unit in embodiment 4.

### [Embodiments of the Invention]

### <Embodiment 1>

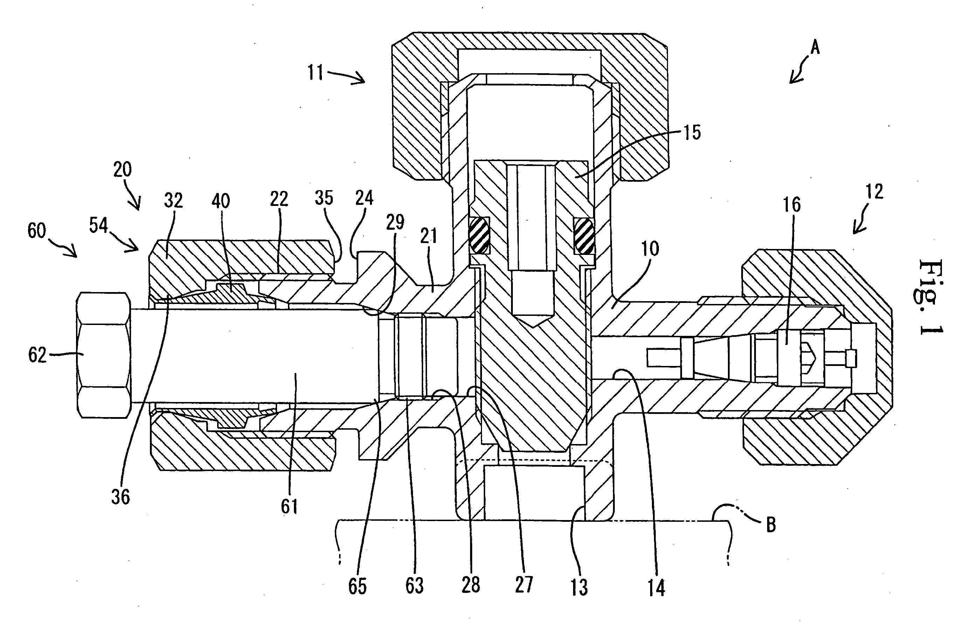

Embodiment 1 of the invention will be described with reference to Figs. 1 to 6. The closing valve A according to embodiment 1 is applied to a household air conditioner (a heat transfer apparatus) in which a metal (copper or copper alloy) pipe P is provided for connecting between an outdoor unit B (serving as a heat exchanger) provided with a compressor and a condenser and an indoor unit (not shown) provided with an expansion valve and an evaporator so that refrigerant (Freon gas) is circulated between the outdoor unit and the indoor unit. Other heat transfer apparatuses each using Freon gas as a refrigerant include air conditioners such as package air conditioners widely used for business purposes and refrigeration equipment such as refrigeration facilities for business purposes, other than household air conditioners. Heat transfer apparatuses using carbon dioxide as a refrigerant include a natural refrigerant heat pump water heater referred to as "EcoCute" (registered trademark). The closing valve A of embodiment 1 can also be applied to these heat transfer apparatuses.

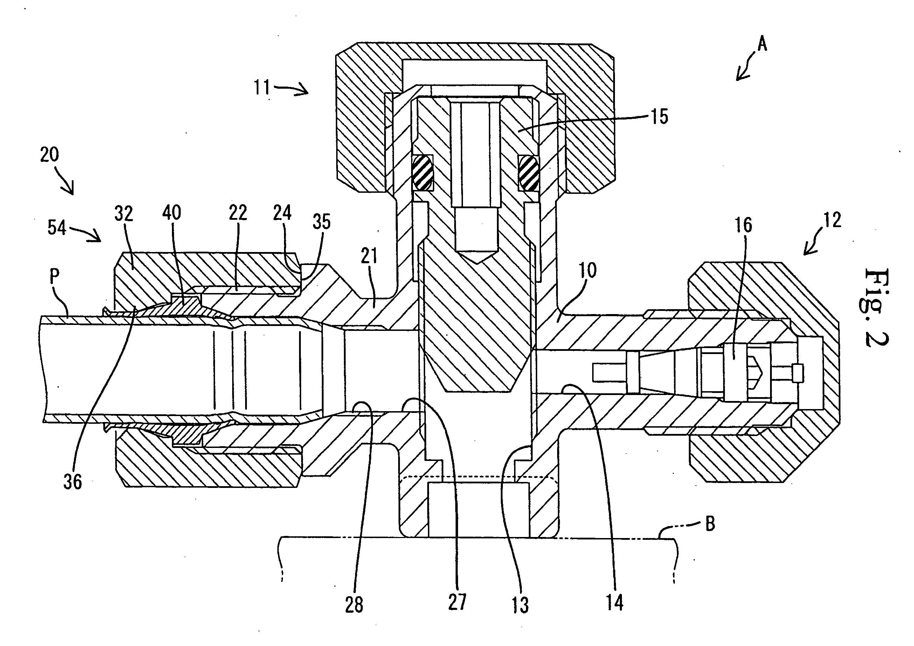

The closing valve A includes a housing 10 made of brass, a first valve function unit 11 (on-off valve), a second valve function unit 12 (service valve) and a joint function unit 20, as shown in Figs. 1 and 2. In the housing 10 are defined a flow path 13 which is bent into an L-shape and has two ends open in an outer surface of the housing 10 and a branched path 14 which communicates with the bent portion of the flow path 13 and is open the outer surface of the housing 10. The closing valve A is adapted to be fixed to an outer surface of the outdoor unit B by bolts so as to be externally exposed. When the closing valve A is fixed to the outdoor unit B, one end of the flow path 13 is inseparably secured to a connecting pipe of a compressor (not shown) by brazing or the like so as to be gastightly sealed.

When a first valve element 15 (a valve element in the invention) manually operated, the first valve function unit 11 is switched between an open state that allows a refrigerant to flow through the flow path 13 and a closed state that limits the flowing of the refrigerant through the flow path 13. The second valve function unit 12 is provided for evacuating air from the interiors of the branched path 14, the flow path 13 continuing to the branched path 14 and the pipe P by manual operation of a second valve element 16.

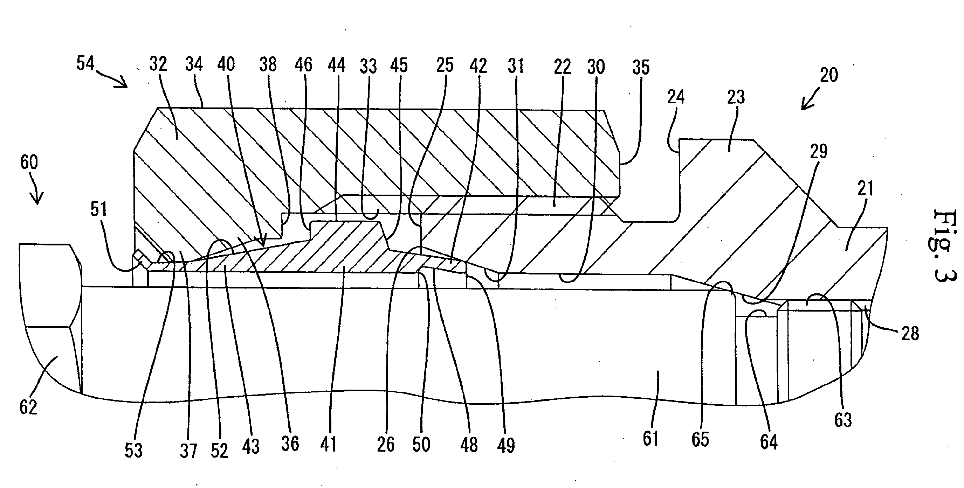

The joint function unit 20 includes a oint body 21, a clamping member 32, a clamp ring 40 and a diameter reducing unit 54 as shown in Figs. 3 to 5. The joint body 21 projects in a cylindrical shape from an outer surface of the housing 10 located opposite the second valve function unit 12. The joint body 21 is formed integrally with the housing 10 into a single component and communicates with the flow path 13.

In the following description, a direction in which the pipe P is inserted into or pulled out of the joint function unit 20 will be referred to as "a front-back direction." The insertion or pulling direction of the pipe P is in parallel with a direction in which the clamping member 32 is threadingly advanced (the clamping member 32 is screwed thereby to axially be moved) and a movement direction of the clamp ring 40 with the clamping. The wording "forward in the insertion direction of the pipe P into the joint function unit 20" (rightward in Figs. 1 to 6) will be referred to merely as "forward, " and the wording "rearward in the insertion direction of the pipe P into the joint function unit 20" will be referred to merely as "rearward." Furthermore, the front-rear direction will have the same meaning as an axial direction parallel with an axis of the joint function unit 20.

The joint body 21 has a rear end further having an outer periphery formed with a male side thread 22 which comprises a male thread and is provided in order that the clamping member 32 may be threadingly engaged (screwed). The outer periphery of the joint body 21 is formed with a jig receiving portion 23 which has a regular hexagonal shape and is located in front of the male side thread 22. The jig receiving portion 23 has a rear end surface formed with a flat receiving surface 24 perpendicular to the axial direction. The joint body 21 also has a rear end surface serving as a flat surface 25 perpendicular to the insertion or the pulling direction of the pipe P. The flat surface 25 has an inner peripheral edge (that is, a peripheral edge defining a boundary with a rear tapered surface 31 as will be described later) formed into a wedge-like corner edge 26.

The joint body 21 has a hollow interior formed into a connecting hole 27 which communicates with the flow path 13. The connecting hole 27 is circular in shape and concentric with the joint body 21 and constitutes a flow path of the refrigerant. The connecting hole 27 has an inner circumference including a female thread 28, a front tapered surface 29 (serving as a sealing receiving portion in the invention), a constant diameter surface 30 and a rear tapered surface 31 (a tapered surface in the invention) sequentially from the front end toward the rear end.

The female thread 28 has a screw groove further having a inner diameter (more specifically, an outer diameter of a male thread 63 of a sealing member 60 as will be described later) that is smaller than an outer diameter of the pipe P and also than a minimum inner diameter of the clamp ring 40 in the state before being connected to the pipe P. A front tapered surface 29 has a diameter that is gradually reduced toward a forward end thereof, which end has an inner diameter (a minimum inner diameter of the front tapered surface 29) that is smaller than the outer diameter of the pipe P. The front tapered surface 29 has a rear end having an inner diameter (a maximum inner diameter of the front tapered surface 29) that is slightly larger than the outer diameter of the pipe P. A constant diameter surface 30 has a constant inner diameter from a front end to a rear end thereof. The constant inner diameter of the surface 30 is the same as the inner diameter of the rear end of the front tapered surface 29. A rear tapered surface 31 has a diameter that is gradually reduced toward a forward end thereof, which end has an inner diameter (a minimum inner diameter of the rear tapered surface 31) that is the same as the inner diameter of the constant diameter portion 30.

A clamping member 32 is made of brass and has an inner periphery including a front end side area in which a female side thread 33 comprising a female thread is formed. The clamping member 32 is coaxially fitted with the joint body 21 from the rear so that the female side thread 33 is threadingly engaged with (screwed) the male side thread 22, whereby the clamping member 32 is mounted on the joint body 21. The clamping member 32 has an outer periphery formed into a regular hexagonal jig fitting portion34. The jig fitting portion 34 has a front end surface (a surface axially opposed to the receiving surface 24 of the joint body 21) formed into a flat abutting surface 35 perpendicular to the axial direction. The abutting surface 35 is adapted to come close to and depart from the receiving surface 24 and to abut on the receiving surface 24 in a face-to-face contact with the threading movement of the clamping member 32.

The inner periphery of the clamping member 32 has a locking portion 36 which is located to rearward of the female side thread 33 (a rear end) and projects inward over an entire periphery of the clamping member 32 in a circular shape concentric with the clamping member 32. The locking portion 36 serves as a holding unit. The locking portion 36 has an inner periphery including an area that is located in front of a minimum diameter portion 37 and formed into a forwardly spread or reverse-tapered shape and another area that is located in the rear of the minimum diameter portion 37 (an inner peripheral rear end of the locking portion 36) and formed into a rearwardly spread or tapered shape. The locking portion 36 has a front end surface formed into a flat pressing surface 38 which is perpendicular to the insertion or the pulling direction of the pipe P and is located opposite the flat surface 25 with a spread-diameter portion 44 of a clamp ring 40 being interposed therebetween when the clamping member 32 is assembled to the joint body 21.

The clamp ring 40 is made of copper or a copper alloy in the same manner as the pipe P and disposed coaxially with the joint body 21 and the clamping member 32. The clamp ring 40 in an undeformed state will now be described. The clamp ring 40 is formed into such a cylindrical shape as to surround the pipe P inserted coaxially into the joint function unit 20. The clamp ring 40 has a minimum inner diameter that is larger than the outer diameter of the pipe P and substantially equal to the inner diameter of the constant diameter surface 30. The clamp ring 40 has a maximum outer diameter that is smaller than an inner diameter of the female side thread 33 of the clamping member 32. The clamp ring 40 has an entire axial length that is shorter than the clamping member 32.

The clamp ring 40 includes a thick ring body 41, a cylindrical clamping portion 42 which is thinner than the ring body 41 and extends forward from the ring body 41, and a holding portion 43 which is thinner than the ring body 41 and extends rearward from the ring body 41. The ring body 41 has an outer periphery serving as a spread-diameter portion 44 which is spread relative to the outer peripheries of the cylindrical clamping portion 42 and the holding portion 43 in a stepped manner. The spread-diameter portion 44 has a front surface formed into a seal surface 45 that is nearly at a right angle to the axial direction and whose diameter is reduced forward. The seal surface 45 serves as a second seal area providing a seal between the joint body 21 and the clamp ring 40. The spread-diameter portion 44 has a rear surface serving as a pressure receiving surface 46 that is perpendicular to the axial direction.

The cylindrical claming portion 42 has an outer periphery formed into a clamping tapered surface 47 (a tapered surface in the invention) that is inclined so that a diameter thereof is gradually reduced forward. The clamping tapered surface 47 has an inclination angle relative to the axial direction (the insertion direction of the pipe P and the direction of axis line of the joint function unit 20). The inclination angle of the clamping tapered surface 47 is set to be smaller than an inclination angle of the rear tapered surface 31 of the joint body 21 . The clamping tapered surface 47 has a front end surface which functions as a first seal area for providing a gastight seal between the joint body 21 and the clamp ring 40. The cylindrical clamping portion 42 has an inner periphery including a substantially first half area formed into a sealing inclined surface 48 substantially in parallel with the clamping tapered surface 47. The inner periphery of the cylindrical clamping portion 42 has a front edge which serves as a first biting portion 49 (a seal area of the clamp ring relative to the pipe in the invention).

The cylindrical clamping portion 42 has an inner periphery including a substantially rear half area in which an inner diameter is constant (smaller than the inner diameter of the rear end of the sealing inclined surface 48) over an entire length and is continuous to an inner peripheral surface of the ring body 41 in a coplanar relationship. The sealing inclined surface 48 of the inner periphery of the cylindrical clamping portion 42 has a rear end (a part separate rearward from the first biting portion 49 in the insertion direction of the pipe P) is formed into a stepped recess. The stepped portion serves as a diagonally forward inwardly pointed edge-like second biting portion 50 (a seal area of the clamp ring relative to the pipe in the invention).

A diameter reducing unit 54 has the aforementioned rear tapered surface 31 inclined relative to the insertion direction of the pipe P and clamping tapered surface 47. When pressed forward by the clamping member 32 threadingly advanced in the clamping direction, the clamp ring 40 is plastically deformed in a diameter-reducing direction while adhering closely to the inner periphery of the joint body 21, thereby biting the outer periphery of the pipe P so as to limit relative displacement and clamping the outer periphery of the pipe P while adhering closely thereto.

The holding portion 43 has a rear end formed with an outward-directed protrusion 51 having a diameter expanded radially outward. The inner peripheral surface of the holding portion 43 includes an entire area that is located in front of the outward-directed protrusion 51, has a constant inner diameter and is continuous to an inner peripheral surface of the ring body 41 in a coplanar relationship. The holding portion 43 has an outer periphery including an area beginning from a position slightly forward from a front end of the protrusion 51 and leading to a front end (the spread-diameter portion 44) of the holding portion 43. The area serves as a holding inclined surface 52 that is inclined so that a diameter thereof is expanded forward. The holding portion 43 has an outer surface including an area located between a rear end of the holding inclined surface 52 and a front end of the protrusion 51. The area serves as a recess 53 where an outer diameter of the holding portion 43 is the smallest.

The clamp ring 40 is put into the clamping member 32 from front before bending the protrusion 51. The protrusion 51 is formed by bending the rear end of the holding portion 43 while the clamp ring 40 is housed in the clamping member 32. The protrusion 51 and the holding inclined surface 52 have respective maximum outer diameters larger than the minimum inner diameter of the locking portion 36. Accordingly, when the locking portion 36 is held between the holding inclined surface 52 and the protrusion 51 back and forth, the clamp ring 40 is mounted on the clamping member 32 while being prevented from being detached both forward and backward.

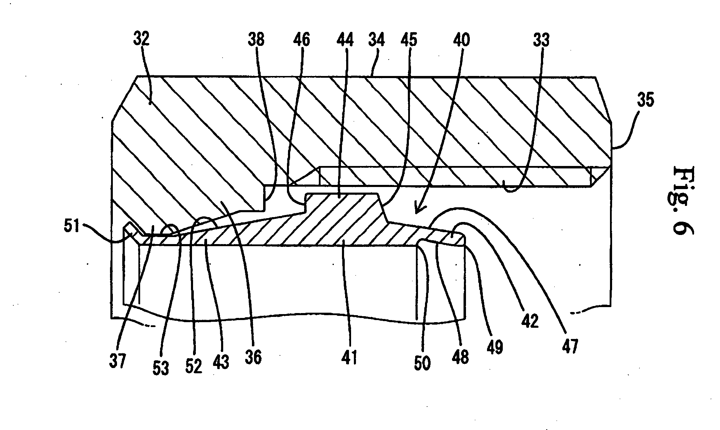

The outer peripheral recess 53 has an outer diameter that is equal to or slightly smaller than a minimum inner diameter of the locking portion 36. As a result, the clamp ring 40 assembled to the clamping member 32 is displaceable by a predetermined amount in a front-back direction relative to the clamping member 32 between a frontmost end position (see Fig. 6) where the protrusion 51 is locked (abutted) by the minimum diameter portion 37 of the locking portion 36 and a rearmost end position where the holding inclined surface 52 is locked (abutted) by the minimum diameter portion 37 of the locking portion 36.

When the clamp ring 40 assumes the rearmost end position, a rear end of the protrusion 51 protrudes in the rear of the clamping member 32, and the pressure receiving surface 46 is separated forward from the pressing surface 38. More specifically, substantially the entire clamp ring 40 except the rear end of the protrusion 51 is housed in the clamping member 32. Furthermore, when the clamp ring 40 assumes the frontmost end position, the entire clamp ring 40 is housed in the clamping member 32. When the clamp ring 40 assumes either position, the cylindrical clamping portion 42 providing the seal between the pipe P and the joint body 21 is retained in the clamping member 32.

The closing valve A includes a sealing member 60 which is detachably attachable to the joint function unit 20 and is capable of limiting flow of refrigerant in the joint function unit 20 in non-contact with the seal area (the first and second biting portions 49 and 50) of the clamp ring 40, as shown in Figs. 1 and 3. The sealing member 60 is made of brass and includes a generally column-shaped seal body 61 and a head 62 (serving as a stopper in the invention) formed integrally on a rear end of the seal body 61 and having a regular hexagonal outer periphery. An imaginary circle (not shown) in contact with an outer periphery of the head 62 has a diameter larger than the outer diameter of the seal body 61 and the minimum inner diameter of the clamping member 32 (the maximum outer diameter of the protrusion 51).

The seal body 61 has a front end formed with a male thread 63. The male thread 63 has a helical pitch that is the same as that of the female thread 28 of the joint body 21 but differs from those of the male side thread 22 and the female side thread 33. The seal body 61 has an outer periphery including an area that is adjacent in the rear of male thread 63 and is formed with a circular reduced-diameter portion 64 concentric with the seal body 61. A boundary between a rear end surface of the reduced-diameter portion 64 and the outer periphery of the seal body 61 serves as a sealing abutment 65 which is chamfered into an arc shape and is continuous over an entire periphery. The seal body 61 has an outer diameter that is smaller than the minimum inner diameter of the clamp ring 40 and larger than the minimum inner diameter of front tapered surface 29.

The operation of the closing valve A constructed as described above will now be described. The joint function unit 20 of the closing valve A is assembled in the following procedure. The first and second valve elements 15 and 16 are mounted on the housing 10 so as to be each in a closed state. Subsequently, the clamping member 32 housing (incorporating) the clamp ring 40 is assembled to the joint body 21 from the rear. In this case, the female side thread 33 is engaged with the male side thread 22 and the clamping member 32 is pinched by hand to be manually turned. The assembling of the clamping member 32 is completed when the turn of the clamping member 32 stops. In this state, since the front end of the cylindrical clamping portion 42 of the clamp ring 40 slightly abuts on the rear tapered surface 31 of the joint body 21, further forward movement (threading advancement) of the clamping member 32 is limited. The clamp ring 40 is not almost deformed at this time. Furthermore, the abutting surface 35 of the clamping member 32 is separate rearward from the receiving surface 24 of the joint body 21.

Subsequently, the sealing member 60 is mounted in the joint function unit 20 from the rear as shown in Figs. 1 and 3. In the mounting, the seal body 61 of the sealing member 60 is gripped by hand and inserted into the clamping member 32, and the male thread 63 is screwed into the female thread 28 of the joint body 21. Since the outer diameters of the seal body 61 and the male thread 63 are smaller than the inner diameter of the clamp ring 40, there is no possibility that the inner periphery of the clamp ring 40 (particularly, the first and second biting portions 49 and 50 both of which are seal areas with respect to the pipe P) may be damaged by the seal body 61. When the sealing member 60 is manually screwed in, the sealing abutment 65 abuts against the front tapered surface 29, with the result that the sealing member 60 cannot be further screwed manually.

Subsequently, a tool such as a wrench is fitted with the head 62 so that the sealing member 60 is further screwed in. By this further screwing, the sealing abutment 65 is adhered closely to the front tapered surface 29 so as to airtightly bite into the front tapered surface 29 over an entire periphery. As the result of close adherence of the sealing abutment 65 to the front tapered surface 29 , a gap between the inner periphery of the joint body 21 and the outer periphery of the sealing member 60 is airtightly sealed. Thus, the assembling of the joint function unit 20 is completed.

The closing valve A assembled as described above is mounted on the exterior unit B of the heat transfer apparatus. Furthermore, the exterior unit B is filled with the refrigerant. However, since flow path 13 is closed by the first valve element 15, there is no possibility that the refrigerant in the exterior unit B may leak to the joint function unit 20 side. Even if the refrigerant should pass through the first valve element 15 to flow into joint function unit 20, the refrigerant would not pass through the joint function unit 20 thereby to be prevented from leaking into the atmosphere since the interior of the joint function unit 20 is airtightly sealed by the sealing action of the sealing member 60.

Even if the worker mistakenly turns the clamping member 32 in a loosening direction (a direction in which the clamping member 32 is detached from the joint body 21), the rear end of the clamping member 32 or the clamp ring 40 abuts against the head 62 of the sealing member 60 before the clamping member 32 is detached from the joint body 21. As a result, further movement (threading advancement) of the clamping member 32 in the loosening direction (rearward) is prevented. Furthermore, even if the clamping member 32 whose movement in the loosening direction is limited by the abutment against the head 62 should be turned in the loosening direction by a strong force, the sealing member 60 is locked without turn together with the clamping member 32 since the female side thread 33 of the clamping member 32 has a helical pitch differing from that of the male thread 63 of the sealing member 60. Consequently, the sealing member 60 can be prevented from loosening when the clamping member 32 functions as a locknut.

When the pipe P is connected to the joint function unit 20, the sealing member 60 is turned in the loosening direction thereby to be detached from joint body 21 (the joint function unit 20). The sealing member 60 extends through the clamping member 32 to be assembled only to the joint body 21 but is not assembled while being held between the joint body 21 and the clamping member 32. Accordingly, when the sealing member 60 is detached, the clamping member 32 may be assembled to the joint body 21. Thus, since the clamping member 32 need not be detached from the joint body 21 when the sealing member 60 is detached, the closing valve A has a higher working efficiency. Furthermore, a pressing force from the sealing abutment 65 sometimes deforms the front tapered surface 29 after the sealing member 60 has been detached. However, since the front tapered surface 29 is an area in which seal is provided with respect to neither the pipe P nor the clamp ring 40. Accordingly, the front tapered surface 29 does not affect the sealing function between the pipe P and the joint function unit 20.

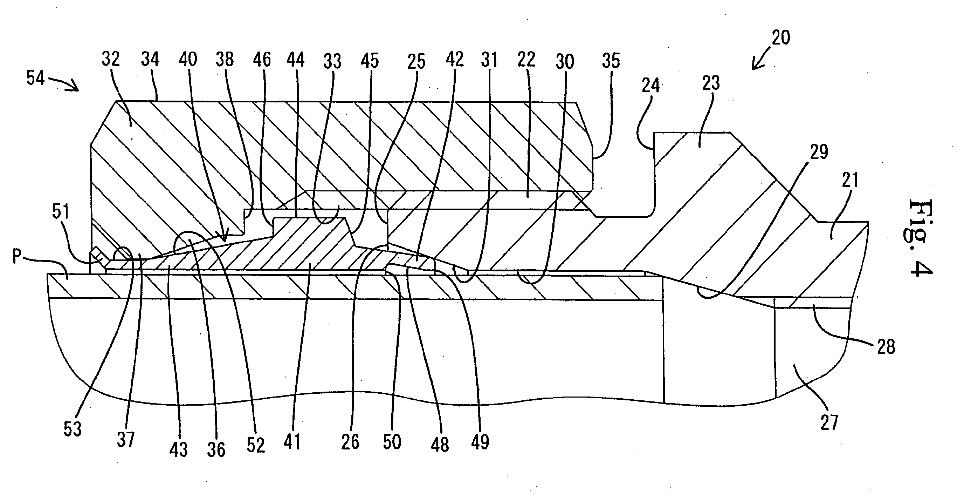

The clamping member 32 is gripped by hand to be turned continuously after the work for detaching the sealing member 60, so that the clamping member 32 is threadingly advanced to a position where the cylindrical clamping portion 42 abuts against the rear tapered surface 31. Subsequently, as shown in Fig. 4, the front end of the pipe P is manually inserted into the joint body 21 so as to extend through the clamping member 32 and the clamp ring 40. In this case, since the outer diameter of the pipe P is larger than the minimum inner diameter of the clamp ring 40, a clearance is ensured between the outer periphery of the pipe P and the inner periphery of the clamp ring 40, the pipe P can smoothly be inserted into the joint body 21. Furthermore, there is no possibility that the inner periphery of the clamp ring 40 (particularly, the first and second biting portions 49 and 50 both of which are seal areas with respect to the pipe P) may be damaged by the outer periphery front edge of the pipe P. The front end of the pipe P inserted into the joint body 21 abuts against the front tapered surface 29 thereby to be stopped. Thus, the front tapered surface 29 has two functions, that is, a function of sealing the interior of the joint function unit 20 in cooperation with the sealing member 60 and a function of stopping the pipe P. When the pipe P has been stopped, manual insertion of the pipe P is completed.

Subsequently, a jig (not shown) such as a spanner wrench is fitted with the jig fitting portion 34 of the clamping member 32 and the jig receiving portion 23 of the joint body 21, so that the clamping member 32 is turned in such a direction (a clamping direction) as to be threadingly moved forward. While the clamping member 32 is being threadingly moved in the clamping direction, the locking portion 36 slides on the holding inclined surface 52, whereby the holding portion 43 is plastically deformed gradually in the diameter reduction direction (a direction in which the holding portion 43 comes close to the outer periphery of the pipe P). When the pressing surface 38 abuts against the pressure receiving surface 46, the diameter reduction deformation of the holding portion 43 is completed. Furthermore, when the pressing surface 38 axially presses the pressure receiving surface 46, the clamp ring 40 is pushed forward relative to the joint body 21. With this, the cylindrical clamping portion 42 is plastically deformed so that the diameter thereof is reduced by the inclination thereof while sliding on the rear tapered surface 31.

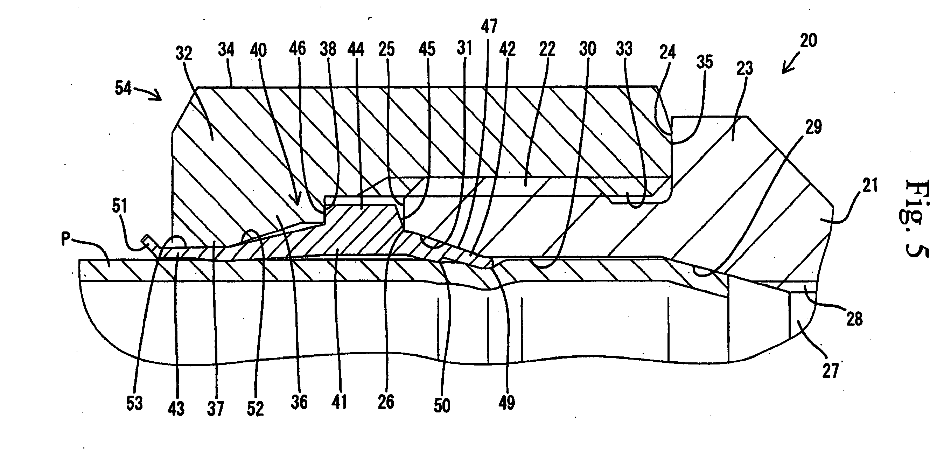

As shown in Figs. 2 and 5, with diameter reduction deformation of the cylindrical clamping portion 42, the first and second biting portions 49 and 50 bite into the outer periphery of the pipe P over the entire periphery like a wedge, thereby limiting the relative displacement of the pipe P in the axial direction. As the result of the biting action, the gap between the inner periphery of the clamp ring 40 and the outer periphery of the pipe P is airtightly sealed at two axially (a lengthwise direction with respect to the pipe P) spaced positions, and the pipe P is locked while being prevented from rearward dropout. Furthermore, the front end of the outer periphery of the cylindrical clamping portion 42 airtightly adheres to the rear tapered surface 31 over its entire periphery while being in the plastically deformed state, and furthermore, the corner edge 26 of the joint body 21 airtightly adheres to the seal surface 45 of the clamp ring 40 over the entire periphery thereof while being in the plastically deformed (crushed) state. As the result of the airtight adhesion, the gap between the outer periphery of the clamp ring 40 and the inner periphery of the joint body 21 at two axially spaced positions.

The airtight biting and the airtight adhesion both with the above-described plastic deformation ensure a normal clamping state of the diameter reducing unit 54, in which state the joint function unit 20 and the pipe P are correctly connected to each other. In this normally assembled state, the refrigerant is reliably prevented from leaking between the pipe P and the joint function unit 20. In the process of threading advancement of the clamping member 32 in the clamping direction, the diameter reducing unit 54 is in a clamping state immediately before the abutting surface 35 reaches the receiving surface 24.

When the diameter reducing unit 54 has changed from the non-normal clamping state to the normal clamping state, the worker cannot recognize the normal clamping state of the diameter reducing unit 54 by appearance. However, an operating manual sets to continue the threading advancement of the clamping member 32 until the abutting surface 35 abuts against the receiving surface 24. Accordingly, the operator continues the threading advancement of the clamping member 32 in the clamping direction according to the operating manual. When having been threadingly advanced such that the abutting surface 35 abuts against the receiving surface 24, the clamping member 32 is stopped such that further advancement cannot be continued. Thus, the connecting of the pipe P is completed.

The biting of the first and second biting members 49 and 50 progresses while the threading advancement of the clamping member 32 continues until the abutting surface 35 abuts against the receiving surface 24 after transfer to the normal clamping state. In this while, the front end of the cylindrical clamping portion 42 and the rear tapered surface 31 are also maintained in the closely adhered state and the corner edge 26 and the seal surface 45 are also maintained in the closely adhered state. As a result, the normal clamping state is maintained. More specifically, a highly-functional water-proof performance (sealing performance) and the pipe P dropout preventing function (locking function) are maintained. Accordingly, when the clamping member 32 is clamped until the abutting surface 35 abuts against the receiving surface 24, the pipe P can reliably be connected into a normal state even when the operator has a low degree of proficiency. Additionally, the completion of the connecting work can visually be confirmed.

The holding portion 43 is provided at the location in the rear of the seal area (the first and second biting portions 49 and 50) between the clamp ring 40 and the pipe P in the insertion direction of the pipe P, so as to correspond to the outer periphery of the pipe P. With threading advancement of the clamping member 32 in the clamping direction, the holding portion 43 is displaced by the clamping member 32 in such a direction as to come close to the outer periphery of the pipe P, whereby the radial displacement of the pipe P is suppressed. According to this construction, when the clamping member 32 is threadingly advanced in the clamping direction so that the clamp ring 40 is clamped on the outer periphery of the pipe P thereby to provide a seal therebetween, the holding member 43 displaced so as to come close to the outer periphery of the pipe P at the location that is separate rearward from the seal area, with the result that the radial displacement of the pipe P is suppressed. In this case, the holding portion 43 is desirable to be in abutment with the outer periphery of the pipe P. However, such a slight gap that does not reduce the sealing performance may be provided between the outer periphery of the pipe P and the holding portion 43. This displacement limiting function of the holding portion 43 prevents the pipe P from an undesirable movement such as pivoting about the seal area by the clamp ring 40 (the first and second biting portions 49 and 50). As a result, since the undesirable deformation is prevented in the seal area between the clamp ring 40 and the pipe P, a high sealing performance is maintained between the clamp ring 40 and the pipe P.

The clamp ring 40 includes the ring body 41 and the cylindrical clamping portion 42 extending forward from the ring body 41 in the insertion direction of the pipe P and formed with the seal area (the first and second biting portions 49 and 50) in cooperation with the pipe P. The holding portion 43 extends rearward from the ring body 41 in the insertion direction of the pipe P. According to this construction, since the holding portion 43 is formed integrally with the clamp ring 40, the number of parts or components can be reduced as compared with the case where the holding member is separate from the clamp ring. Moreover, since the displacement suppressing location by the holding portion 43 and the seal area of the cylindrical clamping portion 42 are separate from each other in the insertion direction of the pipe P to a large extent, an undesirable deformation in the seal area can effectively prevented, whereupon a high sealing performance can be delivered.

The locking portion 36 is formed on the inner periphery of the clamping member 32, and the recess 53 is formed in the outer periphery of the holding portion 43. The recess 53 is locked by the locking portion 36 such that the axial separation of the clamp ring 40 from the clamping member 32 is limited. According to this construction, the holding portion 43 has a locking function that holds the clamp ring 40 in the assembled state to the clamping member 32 as well as the displacement suppressing function that suppresses the radial displacement of the pipe P. Accordingly, the shape of the clamp ring 40 can be simplified as compared with the case where both functions are provided on separate portions of the clamp ring respectively.

When the clamping member 32 is threadingly advanced in the clamping direction in the state where the pipe P is in abutment with the front tapered surface 29, the pipe P is pushed forward in the insertion direction together with the clamp ring 40, with the result that the front end of the pipe P and the front tapered surface 29 adhere closely to each other so that the front tapered surface 29 bites into the front end of the pipe P. Return of the pipe P is limited by frictional resistance due to the biting. Consequently, there is no possibility that an undesirable rearward movement of the pipe P may reduce the sealing performance between the clamp ring 40 and the pipe P.

### <Embodiment 2>

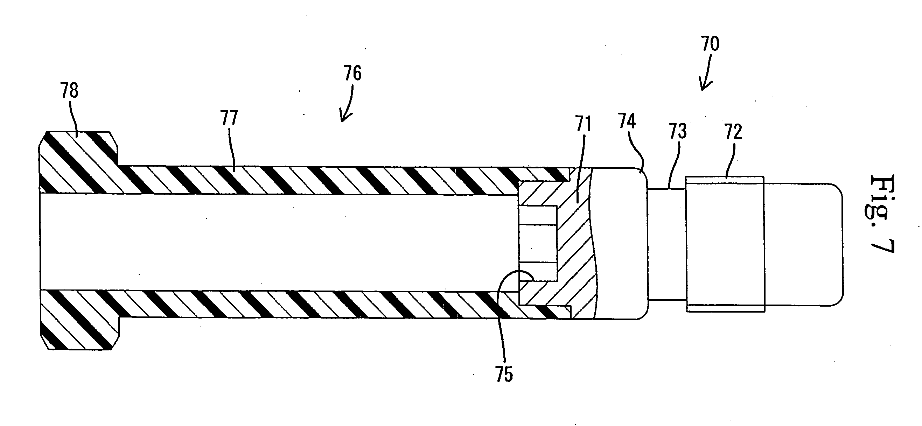

Embodiment 2 will now be described with reference to Fig. 7. A sealing member 70 employed in embodiment 2 has a different construction from the sealing member 60 in the foregoing embodiment 1. Embodiment 2 is the same as embodiment 1 in the other respects. Identical or similar parts in embodiment 2 are labeled by the same reference symbols as those in embodiment 1, and detailed description of these parts will be eliminated.

The sealing member 70 in embodiment 2 includes a seal body 71 made of brass and formed into a substantially columnar shape and a cylindrical protector 76 made of a synthetic resin. The seal body 71 and the cylindrical protector 76 are assembled together into an integral component. The seal body 71 has a front end having an outer periphery formed with the male thread 72 which is the same as that of the seal member 60 in embodiment 1. A reduced-diameter portion 73 is also formed on the outer periphery of the seal body 71 so as to be located in the rear of the male thread 72. The sealing abutment 74 which is the same as the sealing member 60 in the first embodiment is further formed on the outer periphery of the seal body 71 so as to be located in the rear of the reduced-diameter portion 73. Furthermore, the seal body 71 has a rear end surface formed with a fitting recess 75 with which the hexagonal wrench (not shown) is to be fitted. The cylindrical protector 76 includes a cylindrical portion 77 having an outer diameter that is the same as that of the seal body 71 and a hexagonal head 78 formed on the outer periphery of a rear end of the cylindrical portion 77. The cylindrical protector 76 has a front end which is fitted with the outer periphery of the rear end of the seal body 71 thereby to be inseparably assembled by press fitting, adhesion or the like.

When the sealing member 70 is assembled to the joint function unit 20, the sealing member 70 is manually inserted into the joint function unit 20 and the male thread 72 is threadingly engaged with the female thread 28. Subsequently, when a wrench is fitted with the fitting recess 75 to clamp the seal body 71, the sealing abutment 74 abuts against the front tapered surface 29, whereby the gap between the outer periphery of the sealing member 70 and the inner periphery of the joint body 21 is airtightly sealed. The sealing member 70 in embodiment 2 is lightweight and cost-effective as compared with the sealing member 60 in embodiment 1. The cylindrical protector 76 is interposed between an insertion path of the wrench and the inner periphery of the clamp ring 40 in the joint function unit 20 when the wrench is fitted with or detached from the fitting recess 75 with the sealing member 70 being assembled to the joint function unit 20. Accordingly, there is no possibility that the inner periphery of the clamp ring 40 (in particular, the seal area between the pipe P and the clamp ring 40 or the first and second biting portions 49 and 50) may be damaged by the wrench.

### <Embodiment 3>

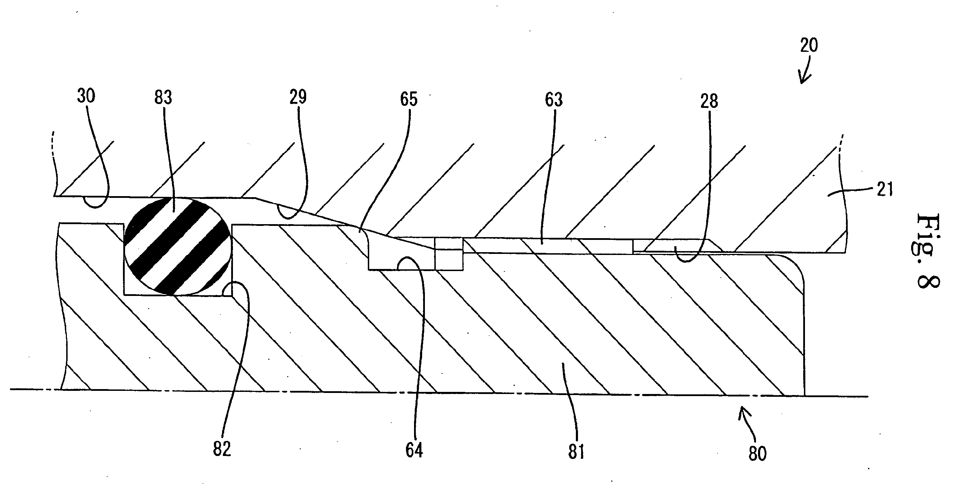

Embodiment 3 will now be described with reference Fig. 8. A sealing member 80 employed in embodiment 3 has a different construction from the sealing member 60 in embodiment 1. Embodiment 3 is the same as embodiment 1 in the other respects. Identical or similar parts in embodiment 3 are labeled by the same reference symbols as those in embodiment 1, and detailed description of these parts will be eliminated.

The sealing member 80 includes the seal body 81 having the male thread 63 which is formed on the outer periphery of the front end of the seal body 81 and is the same as that of the sealing member 60 in embodiment 1. A reduced-diameter portion 64 is also formed on the outer periphery of the seal body 81 so as to be located in the rear of the male thread 63. The sealing abutment 65 which is the same as the sealing member 60 in embodiment 1 is further formed on the outer periphery of the seal body 81 so as to be located in the rear of the reduced-diameter portion 64. A seal groove 82 is formed so as to be located in the rear of the sealing abutment 65. A ring-shaped sealing member 83 is mounted in the seal groove 82. In the state where the sealing member 80 is mounted on the joint function unit 20, an airtight seal is provided between the sealing abutment 65 and the front tapered surface 29 and additionally, the sealing member 83 airtightly adheres closely to the inner periphery of the constant diameter portion 30 at the location in the rear of the sealing abutment 65, whereby an airtight seal is also provided between the outer periphery of the sealing member 80 and the inner periphery of the joint body 21.

### <Embodiment 4>

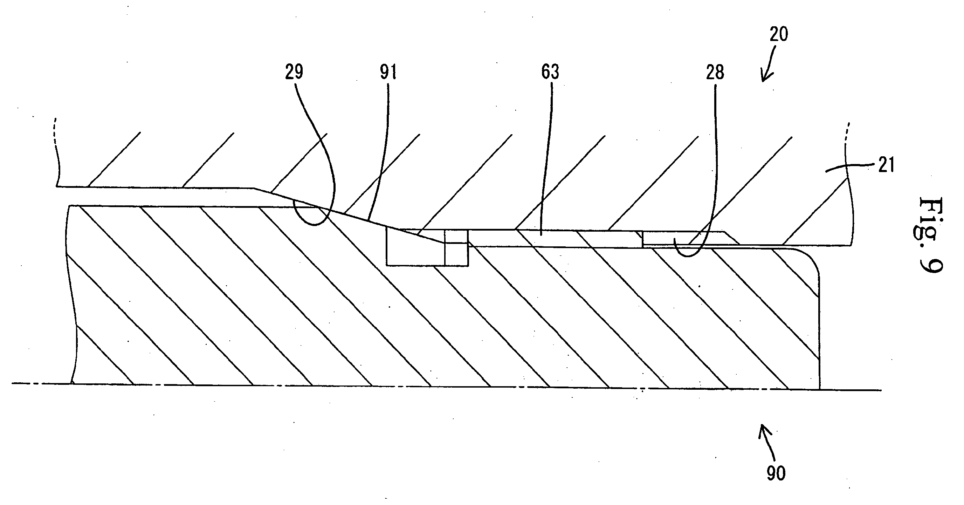

Embodiment 4 will be described with reference to Fig. 9. A sealing member 90 employed in embodiment 4 has a different construction from the sealing member 60 in embodiment 1. Embodiment 4 is the same as embodiment 1 in the other respects. Identical or similar parts in embodiment 4 are labeled by the same reference symbols as those in embodiment 1, and detailed description of these parts will be eliminated. The sealing member 90 has a sealing abutment 91 which is tapered so as to have the same inclination angle as the front tapered surface 29. The sealing abutment 91 is configured to airtightly abut on the front tapered surface 29 into a face-to-face contact.

### <Other embodiments>

The invention should not be limited to the embodiments described above with reference to the accompanying drawings but the following embodiments are also contained in the technical scope of the present invention.
(1) Although the joint body of the joint function unit is formed integrally with the housing in the foregoing embodiments, the joint body may be formed independent of the housing and assembled to the housing.
(2) Although the closing valve is a three-way valve provided with the first valve element (the on-off valve) for opening and closing the flowpath and the second valve element (service valve) for evacuating the flow path in the foregoing embodiments, the invention may be applied to a two-way valve without the second valve element (service valve).
(3) Although the closing valve has a single joint function unit in the foregoing embodiments, the invention may be applied to a closing valve with a plurality of joint function units.
(4) Although the pipe is made of copper or a copper alloy in the foregoing embodiments, the material for the pipe may be any other metal.
(5) Although the clamp ring is made of copper or a copper alloy in the foregoing embodiments, the material for the clamp ring may be any other metal.
(6) Although the clamp ring and the pipe are made of the same material in the foregoing embodiments, the clamp ring and the pipe may be made of different materials.
(7) Although the housing (the joint body) is made of brass in the foregoing embodiments, the housing may be made of another metal.
(8) Although the clamping member is made of brass in the foregoing embodiments, the clamping member may be made of a material other than brass.
(9) Although the sealing member is made of brass in embodiment 1, the sealing member may be made of a metal other than brass.
(10) Although the seal body of the sealing member is made of brass in embodiment 2, the seal body of the sealing member may be made of a metal other than brass.
(11) Although the rear end of the outwardly directed protrusion projects rearward from the clamping member in the foregoing embodiments when the clamp ring assumes the rearmost end location, the rear end of the outwardly directed protrusion may not protrude rearward from the clamping member and the entire clamp ring may be housed in the clamping member.
(12) Although the clamp ring is axially displaceable freely relative to the clamping member with the clamp ring being assembled to the clamping member in the foregoing embodiments, the clamp ring may not be axially displaceable freely relative to the clamping member with the clamp ring being assembled to the clamping member. Even in this case, when the clamping member is turned so as to be threadingly advanced in the clamping direction, the clamp ring is rearwardly displaced relative to the clamping member.
(13) Although the clamp ring is held in an assembled state in the clamping member and assembled to the joint body by a single action in the foregoing embodiments, the clamp ring and the clamping member may not be held in the assembled state and may be assembled to the joint body independent of each other.
(14) Although two seal portions between the clamp ring and the pipe are provided so as to be spaced away from each other in the pipe insertion direction in the foregoing embodiments, one, three or more seal portions may be provided so as to be spaced away from each other in the pipe insertion direction.
(15) Although two seal portions between the clamp ring and the joint body are provided so as to be spaced away from each other in the pipe insertion direction in the foregoing embodiments, one, three or more seal portions may be provided so as to be spaced away from each other in the pipe insertion direction.
(16) In the foregoing embodiments, the clamp ring comes into the normal clamping state relative to the pipe before the abutting surface of the clamping member reaches the receiving surface of the clamp body in the process of threading advancement of the clamping member in the clamping direction. Thereafter, the clamp ring is maintained in the normal assembled state until the abutting surface abuts against the receiving surface, and the manual requires the clamping member to be clamped until the abutting surface abuts against the receiving surface, whereby the clamp ring reliably clams the pipe. However, the clamp ring may reliably clamp the pipe by controlling the clamping torque of the clamping member, instead.
(17) Although the receiving surface is formed integrally on the joint body in the foregoing embodiments, a spacer may be mounted on a surface of the joint body opposed to the abutting surface and the surface opposed to the abutting surface may serve as the receiving surface.
(18) Although the locking portion protrudes inwardly from the inner periphery of the clamping member in the foregoing embodiments, the locking portion may be formed by recessing the inner periphery of the clamping member. In this case, a protrusion formed on the outer periphery of the clamp ring is locked by the locking portion.
(19) Although the sealing receiving portion is disposed in the rear of the female thread in the insertion direction of the pipe into the joint function unit in embodiments 1 and 2, the sealing receiving portion may be disposed in front of the female thread in the pipe insertion direction.
(20) Although the sealing abutting portion is disposed in the rear of the male thread in the insertion direction of the pipe into the joint function unit in embodiments 1 and 2, the sealing abutting portion may be disposed in front of the male thread in the pipe insertion direction.

## Claims

1. A closing valve including:
a housing (10) mounted on a heat exchanger (B);
a refrigerant flow path (13) formed in the housing (10);
a valve element (15) opening and closing the flow path (13);
and
a joint function unit (20) which connects a pipe (P) to the flow path (13), the joint function unit (20) including:
a cylindrical joint body (21) which constitutes one end of the flow path (13) and into which the pipe (P) is adapted to be inserted;
a cylindrical clamping member (32) which is threadingly engaged with an outer periphery of a rear end of the joint body (21) in pipe insertion direction in a coaxial manner and through which the pipe (P) is adapted to extend;
a clamp ring (40) adapted to surround the pipe (P) coaxially inserted into the joint body (21); and
a diameter reducing unit (54) which has an tapered surface (31, 47) inclined in the pipe insertion direction and which presses the clamp ring (40) by the clamping member (32) threadingly advanced in a tightening direction, whereby the clamp ring (40) is plastically deformed in a diameter-reducing direction while gastightly adhering to an inner periphery of the joint body (21) thereby to bite into and gastightly adhere to an outer periphery of the pipe (P) with relative displacement of the clamp ring (40) being limited, **characterized by**:
a sealing member (60, 70, 80, 90) detachably attachable to the joint function unit (20) and capable of limiting flow of the refrigerant in the joint function unit (20) while in non-contact with a seal area (49, 50) of the inner periphery of the clamp ring (40) with respect to the pipe (P), and wherein:
the joint body (21) has an inner periphery formed with a female thread (28) and a sealing receiving portion (29);
the sealing member (60, 70, 80, 90) is inserted into the joint function unit (20) so as to extend through the clamping member (32);
the sealing member (60, 70, 80, 90) has an outer periphery formed with a male thread (63, 72) and a sealing abutting portion (65, 74, 91); and
the male thread (63, 72) is screwed into the female thread (28) so that the sealing abutting portion (65, 74, 91) abuts against the sealing receiving portion (29) in a gastight manner, whereby flow of the refrigerant in the joint function unit (20) is limited such that refrigerant in the flow path (13) does not leak into the atmosphere since the interior of the joint function unit (20) is airtightly sealed by the sealing action of the sealing member (60, 70, 80, 90).

2. The closing valve according to claim 1, wherein the sealing member (60, 70, 80, 90) includes a seal body (61, 71, 81) having a front end on which the male thread (63, 72) is formed and a stopper (62) which is formed integrally with a rear end of the seal body (61, 71, 81) and limits movement of the clamping member (32) in a loosening direction when a rear end of the clamping member (32) abuts against the stopper (62).

3. The closing valve according to claim 2, wherein the male thread (63, 72) has a helical pitch differing from a helical pitch of a threading engagement portion of the joint body (21) and the clamping member (32), and the sealing member (60, 70, 80, 90) is locked without rotation together with the clamping member (32) due to the difference between the helical pitches even when the clamping member (32) is rotated in the loosening direction while being in abutment against the stopper (62) thereby to be prevented from moving in the loosening direction.

## Patentansprüche

1. Schließventil, das umfasst:
ein Gehäuse (10), das auf einem Wärmetauscher (B) montiert ist;
einen Kältemittelströmungsweg (13), der in dem Gehäuse (10) ausgebildet ist;
ein Ventilelement (15), das den Strömungsweg (13) öffnet und schließt;
und
eine Verbindungsfunktionseinheit (20), die eine Leitung (P) mit dem Strömungsweg (13) verbindet, wobei die Verbindungsfunktionseinheit (20) umfasst:
einen zylindrischen Verbindungsstückkörper (21), der ein Ende des Strömungswegs (13) bildet und in den die Leitung (P) geeignet ist, eingesetzt zu werden;
ein zylindrisches Spannelement (32), das in der Leitungseinsetzrichtung in einer koaxialen Weise schraubend mit einem Außenumfang eines hinteren Endes des Verbindungsstückkörpers (21) eingreift, wobei die Leitung (P) geeignet ist, sich durch dieses zu erstrecken;
einen Spannring (40), der geeignet ist, die koaxial in den Verbindungsstückkörper (21) eingesetzte Leitung (P) zu umgeben; und
eine Durchmesserverkleinerungseinheit (54), die eine konisch zulaufende Oberfläche (31, 47) hat, die in der Rohreinsetzrichtung schräg ist und die auf den Spannring (40) durch das Spannelement (32), das in einer Festziehrichtung schraubend vorgerückt wird, drückt, wodurch der Spannring (40) in der Durchmesserverkleinerungsrichtung plastisch verformt wird, während er gasdicht an einem Innenumfang des Verbindungsstückkörpers (21) haftet, um dadurch in einen Außenumfang der Leitung (P) einzuschneiden und gasdicht daran zu haften, wobei die relative Verschiebung des Spannrings (40) begrenzt ist, **gekennzeichnet durch**:
ein Dichtungselement (60, 70, 80, 90), das lösbar an der Verbindungsfunktionseinheit (20) anbringbar ist und fähig ist, die Strömung des Kältemittels in der Verbindungsfunktionseinheit (20) zu begrenzen, während es keinen Kontakt mit einer Dichtungsfläche (49, 50) des Innenumfangs des Spannrings (40) in Bezug auf die Leitung (P) hat, und wobei:
der Verbindungsstückkörper (21) einen Innenumfang, der mit einem aufnehmenden Gewinde (28) versehen ist, und einen Dichtungsaufnahmeabschnitt (29) hat;
das Dichtungselement (60, 70, 80, 90) in die Verbindungsfunktionseinheit (20) eingesetzt ist, um sich **durch** das Spannelement (32) zu erstrecken;
das Dichtungselement (60, 70, 80, 90) einen Außenumfang, der mit einem aufzunehmenden Gewinde (63, 72) ausgebildet ist, und einen dichtenden Auflagerabschnitt (65, 74, 91) hat; und
das aufzunehmende Gewinde (63, 72) in das aufnehmende Gewinde (28) geschraubt ist, so dass der dichtende Auflagerabschnitt (65, 74, 91) an dem Dichtungsaufnahmeabschnitt (29) in einer gasdichten Weise anliegt, wodurch die Strömung des Kältemittels in der Verbindungsfunktionseinheit (20) derart begrenzt wird, dass Kältemittel in dem Strömungsweg nicht in die Atomsphäre leckt, da das Innere der Verbindungsfunktionseinheit (20) **durch** die Dichtwirkung des Dichtungselements (60, 70, 80, 90) luftdicht verschlossen ist.

2. Schließventil nach Anspruch 1, wobei das Dichtungselement (60, 70, 80, 90) einen Dichtungskörper (61, 71, 81) mit einem Vorderende, auf dem das aufzunehmende Gewinde (63, 72) ausgebildet ist, und einem Anschlag (62), der integral mit einem hinteren Ende des Dichtungskörpers (61, 71, 81) ausgebildet ist und die Bewegung des Spannelements (32) in einer Löserichtung begrenzt, wenn ein hinteres Ende des Spannelements (32) an dem Anschlag (62) anliegt, umfasst.

3. Schließventil nach Anspruch 2, wobei das aufzunehmende Gewinde (63, 72) eine Gewindesteigung hat, die sich von einer Gewindesteigung eines Gewindeeingreifabschnitts des Verbindungsstückkörpers (21) und des Spannelements (32) unterscheidet, und das Dichtungselement (60, 70, 80, 90) aufgrund des Unterschieds zwischen den Gewindesteigungen ohne Drehung zusammen mit dem Spannelement (32) arretiert wird, selbst wenn das Spannelement (32) in die Löserichtung gedreht wird, während es an dem Anschlag (62) anliegt, wodurch verhindert werden soll, dass es sich in die Löserichtung bewegt.

## Revendications

1. Soupape d'arrêt incluant :
un logement (10) monté sur un échangeur thermique (B) ;
un trajet d'écoulement de réfrigérant (13) formé dans le logement (10) ;
un élément de soupape (15) ouvrant et fermant le trajet d'écoulement (13) ; et
un module à fonction de joint (20) qui connecte un tuyau (P) au trajet d'écoulement (13), le module à fonction de joint (20) incluant :
un corps de joint cylindrique (21) qui constitue une extrémité du trajet d'écoulement (13) et dans lequel le tuyau (P) est adapté à être inséré ;
un élément de serrage cylindrique (32) qui est engagé par filetage avec une périphérie externe d'une extrémité arrière du corps de joint (21) dans la direction d'insertion de tuyau de manière coaxiale et à travers lequel le tuyau (P) est adapté à s'étendre ;
une bague de serrage (40) adaptée à entourer le tuyau (P) inséré de manière coaxiale dans le corps de joint (21) ; et
un module réducteur de diamètre (54) qui a une surface conique (31, 47) inclinée dans la direction d'insertion de tuyau et qui appuie sur la bague de serrage (40) par l'élément de serrage (32) avancé par filetage dans une direction de serrage, moyennant quoi la bague de serrage (40) est déformée de manière plastique dans une direction de réduction de diamètre tout en adhérant de manière étanche au gaz à une périphérie interne du corps de joint (21) pour mordre de ce fait dans et adhérer de manière étanche au gaz à une périphérie externe du tuyau (P) avec un déplacement relatif de la bague de serrage (40) qui est limité, **caractérisée par** :
un élément d'étanchéité (60, 70, 80, 90) pouvant être relié de manière amovible au module à fonction de joint (20) et capable de limiter l'écoulement du réfrigérant dans le module à fonction de joint (20) tout en n'étant pas en contact avec une zone d'étanchéité (49, 50) de la périphérie interne de la bague de serrage (40) par rapport au tuyau (P), et dans laquelle :
le corps de joint (21) a une périphérie interne formée d'un filet femelle (28) et d'une portion de réception d'étanchéité (29) ;
l'élément d'étanchéité (60, 70, 80, 90) est inséré dans le module à fonction de joint (20) de manière à s'étendre à travers l'élément de serrage (32) ;
l'élément d'étanchéité (60, 70, 80, 90) a une périphérie externe formée d'un filet mâle (63, 72) et d'une portion de butée d'étanchéité (65, 74, 91) ; et
le filet mâle (63, 72) est vissé dans le filet femelle (28) de sorte que la portion de butée d'étanchéité (65, 74, 91) bute contre la portion de réception d'étanchéité (29) de manière étanche au gaz, moyennant quoi l'écoulement du réfrigérant dans le module à fonction de joint (20) est limité de sorte que du réfrigérant dans le trajet d'écoulement (13) ne fuit pas dans l'atmosphère étant donné que l'intérieur du module à fonction de joint (20) est scellé de manière étanche à l'air par l'action d'étanchéité de l'élément d'étanchéité (60, 70, 80, 90).

2. Soupape d'arrêt selon la revendication 1, dans laquelle l'élément d'étanchéité (60, 70, 80, 90) inclut un corps d'étanchéité (61, 71, 81) ayant une extrémité avant sur laquelle le filet mâle (63, 72) est formé et un bouchon (62) qui est formé de manière intégrante d'une extrémité arrière du corps d'étanchéité (61, 71, 81) et limite le mouvement de l'élément de serrage (32) dans une direction de desserrage lorsqu'une extrémité arrière de l'élément de serrage (32) bute contre le bouchon (62).

3. Soupape d'arrêt selon la revendication 2, dans laquelle le filet mâle (63, 72) a un pas hélicoïdal différant d'un pas hélicoïdal d'une portion d'engagement de filetage du corps de joint (21) et de l'élément de serrage (32), et l'élément d'étanchéité (60, 70, 80, 90) est verrouillé sans rotation avec l'élément de serrage (32) en raison de la différence entre les pas hélicoïdaux même lorsque l'élément de serrage (32) est tourné dans la direction de desserrage tout en étant en butée contre le bouchon (62) pour être empêché de ce fait de se déplacer dans la direction de desserrage.
